Europäisches Patentamt

European Patent Office

Office européen des brevets

(19)

(11) Publication number: **0 094 452**
**A2**

## (12) EUROPEAN PATENT APPLICATION

(21) Application number: **82111447.7**

(22) Date of filing: **10.12.82**

(51) Int. Cl.³: **G 11 B 5/84**

(30) Priority: **19.05.82 US 379598**

(43) Date of publication of application:
**23.11.83 Bulletin 83/47**

(84) Designated Contracting States:
**DE FR GB**

(71) Applicant: **International Business Machines**
**Corporation**
**Old Orchard Road**
**Armonk, N.Y. 10504(US)**

(72) Inventor: **DePalma, Vincent Michael**
**491 Shawnee Lane**
**San Jose California 95123(US)**

(74) Representative: **Petersen, Richard Courtenay et al,**
**IBM Svenska AB Patent Operations Box 962**
**S-181 09 Lidingö(SE)**

(54) Production of magnetic recording medium with vertically oriented acicular particles.

㊋ A process produces a magnetic recording composition having vertically aligned acicular magnetic particles therein. The particles are dispersed in a curable binder system which is subjected to radiant energy while the particles are vertically aligned by an applied magnetic field to rapidly cure the coating and effectively "freeze" the particles in their vertically aligned orientation.

A liquid, curable binder system (12) containing acicular magnetic particles (13) is applied to a substrate (11). The magnetic particles are subjected to a magnetic field by an electromagnet (16) to align the particles vertically. Radiant energy (17) is applied to the surface of the binder system containing the vertically aligned particles to gel the binder system sufficiently to maintain the particles vertical. The method is particularly applicable to a magnetic recording disk to provide perpendicular anisotropy.

FIG. 2

EP 0 094 452 A2

Croydon Printing Company Ltd.

1

SA9-82-017

PRODUCTION OF MAGNETIC RECORDING MEDIUM

WITH VERTICALLY ORIENTED ACICULAR PARTICLES


This invention relates to methods of preparing magnetic coating layers.


Because of the potential for greatly increased magnetic storage density, there is substantial interest in the use of magnetic media with perpendicular anisotropy for magnetic recording. Heretofore, it has not been practical to use acicular magnetic particles for vertical recording because such particles could not be maintained magnetically aligned in the required vertical direction during a conventional thermal cure of the coating. Therefore, the magnetic media proposed for vertical recording were of the thin film type, produced by sputtering or some other vacuum technique. As an example of the interest in vertical recording, an article "CoCr Recording Films with Perpendicular Magnetic Anisotropy", by S. Iwasaki and K. Ouchi appeared in the IEEE Transactions on Magnetics MAG-14, No. 5, pp 849-851, September 1978. Also, an article entitled "Perpendicular Magnetic Recording with a Composite Anisotropy Medium", by S. Iwasaki, Y. Nakamura and K. Ouchi was published in the IEEE Transactions on Magnetics, MAG-15, pp 1456-1458, September 1979. Further, an article identified as "Self-Consistent Computer Calculations for Perpendicular Magnetic Recording", by R.I. Potter and I.A. Beardsley appeared in the IEEE Transactions on Magnetics, MAG-16, No. 5, pp 967-972, September 1980.


The requirement for vacuum equipment to perform the sputtering or evaporation for these prior art thin film vertical recording media creates problems of expensive equipment, and time-consuming and energy-intensive operations.

The object of the present invention is to provide a magnetic coating layer including acicular magnetic particles which are held in vertically aligned condition.

According to the invention, this is achieved by the steps of applying the binder system to a substrate, applying a magnetic field to at least some of the magnetic particles to align the particles vertically in the binder system, and applying radiant energy to the surface of the binder system containing the vertically aligned particles to produce a radiation-induced cure of the curable elements of the binder system thereby to lock the particles in the vertically aligned condition.

In summary, acicular magnetic particles may be used to produce a vertical recording medium by dispersing the particles in a curable binder system, subjecting the acicular particles to a magnetic field which will align the particles vertically in the still-liquid binder system, and rapidly curing the binder system by the application of radiant energy effectively to "freeze" the acicular particles in their vertically aligned position in the binder.

The scope of the invention is defined by the appended claims; and how it can be carried into effect is hereinafter particularly described with reference to the accompanying drawings, in which :-

FIG. 1 is a schematic representation of acicular magnetic particles vertically aligned in a liquid binder system on a magnetic disk substrate by an applied magnetic field; and

FIG. 2 is a schematic representation showing the application of radiant energy rapidly to cure the binder with the aligned particles therein.

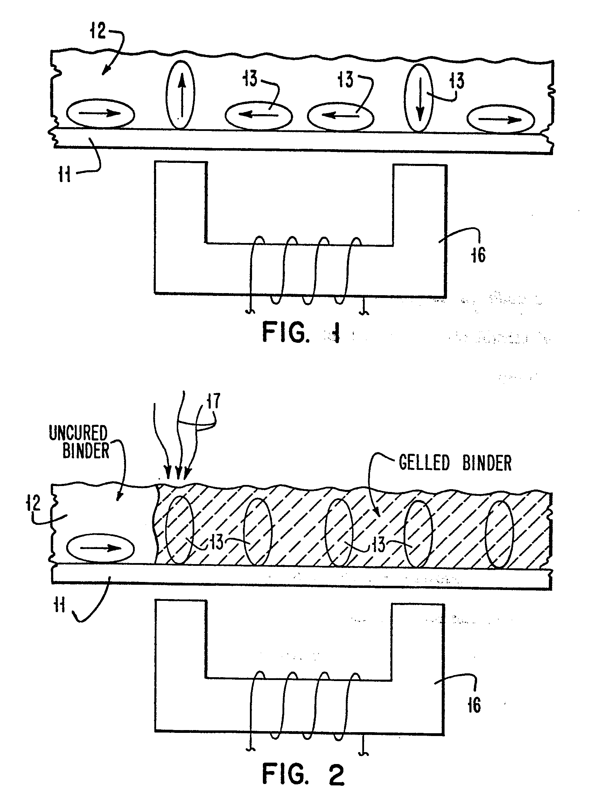

The present invention is applicable to the coating of a number of magnetic devices including rigid and flexible magnetic disks and magnetic tape, but is described herein in relation to a rigid magnetic disk. A rigid disk substrate 11 (Fig.1) has applied thereto a curable liquid binder system 12 which includes acicular magnetic particles 13. The binder system may be of any suitable type, ·such as the epoxy/phenolic/solvent system described in US-A-3,058,844. The curable liquid binder system, including particles 13, may be applied to substrate 11 by a suitable technique such as the spin coating method taught in US-A-3,198,657. In the absence of a magnetic particle- orienting field, particles 13 would be aligned in a horizontal orientation. However, if a magnetic field is applied to the acicular particles, such as by an electromagnet 16 positioned as shown, particles 13 will align themselves in a vertical orientation. In accordance with the present invention, these vertically aligned acicular particles are effectively "frozen" in this aligned condition by the application of radiant energy to produce a rapid radiation-induced cure of the curable elements of the binder system. This is a distinct advantage over the conventional thermal curing methods which involve an extended curing period at an elevated temperature, during which period the acicular magnetic particles can not be maintained in a vertically aligned orientation.

4

The operation of the present invention is diagrammatically illustrated in FIG. 2 where a source of radiant energy, schematically identified as 17, is applied to the curable binder system. This produces a rapid radiation-induced curing of the curable elements of the binder system to lock particles 13 vertically aligned by the electromagnet 16 in that condition in the cured binder. The magnetic aligning field does not have to be maintained until the coating is totally cured - the only requirement is that the aligning field be maintained until the coating reaches its gel point at which time it has reached sufficient cross-linking density to maintain the particles in vertical alignment. In FIG. 2, the radiant energy 17 is applied to the binder system in the area where the particles 13 are vertically aligned by one of the poles of magnet 16. This produces a sequential curing of the binder during relative motion between magnet 16 and the magnetic disk. Alternatively, all of particles 13 in the binder system could be simultaneously aligned in a vertical orientation and radiant energy applied to the entire surface of the binder system to produce simultaneous radiation-induced curing of the entire surface of the coating layer.

The source of radiant energy 17 may be of any suitable type, such as electron beam, ultraviolet or infra-red. The significant requirement for this source is that it apply sufficient energy to the binder system to gel the coating while the particles 13 are aligned in a vertical orientation.

As an example of the application of the present invention, samples of a current binder system used in commercial magnetic disk files were cured by the application thereto of radiant energy in the form of an electron beam. The samples were sections of a disk having a binder system employing epoxy and phenolic resins with suitable

5

solvents, and acicular magnetic particles of gamma $Fe_2O_3$ dispersed in the binder system. Relatively large area curing was accomplished by defocusing the electron beam. Table I below shows the results of the testing.

## TABLE I

| Dosage $(coul/cm^2)$ | Result |
| --- | --- |
| $1 \times 10^{-5}$ | Uncured |
| $1 \times 10^{-4}$ | Uncured |
| $1 \times 10^{-3}$ | Uncured |
| $5 \times 10^{-3}$ | Cured (Solvent resistant) |
| $1 \times 10^{-2}$ | Cured (Solvent resistant) |
| $5 \times 10^{-2}$ | Cured (Solvent resistant) |

The fact that energy dosages higher than optimum were required to cure these samples is due to the presence of the gamma $Fe_2O_3$ and the choice of polymeric binder.

Similarly, binder systems other than epoxy/phenolic systems should produce better results. Particularly, acrylate binder systems may be particularly attractive for use in the present invention because of their proven fast reaction rates with radiant-curing techniques. Furthermore, acrylate monomers can be used in place of solvents as a means for lower coating viscosity. These monomers then react. The advantage is the decreased use of expensive, pollution-causing, and health problem related solvents. A further advantage is to reduce coating shrinkage and voids due to solvent losses.

Regardless of the type of acicular magnetic particles and curable binder system employed, the present invention offers many advantages. It permits the continued use in magnetic disk manufacturing of much of the equipment now employed in the manufacture of current commercial magnetic disks. Such equipment includes that employed for substrate treatment, coating mixing and coating application. This would also represent a substantial savings in terms of space, time and energy over the use of evaporative or sputtering equipment to produce thin film disks for vertical recording.

An additional advantage of the present invention is that it results in a more uniform cure than current coating cure methods. A current thermal cure is due to both condensation and oxidation crosslinking. The degree of cure will then be a function of coating depth. The surface will be the most completely crosslinked, with the degree of crosslinking decreasing with depth (limited by gas diffusion). After buffing, a partially crosslinked (cured) surface remains, as evidenced by the presence of low-molecular weight extractables. In contrast to this, the radiant energy technique has the potential for a uniform cure of the coating. A further advantage of the present invention is that disk coating formulations can be tailored to the cure techniques to reduce energy consumption and improve performance.

7

CLAIMS

1    A method of preparing a magnetic coating layer from a liquid, curable binder system (12) containing acicular magnetic particles (13), comprising the steps of applying the binding system to a substrate (11), applying a magnetic field to at least some of the magnetic particles to align the particles vertically in the binder system, and applying radiant energy to the surface of the binder system containing the vertically aligned particles to produce a radiation-induced cure of the curable elements of the binder system thereby to lock the particles in the vertically aligned condition.

2    A method according to claim 1, in which the binder system contains polymers and the radiant energy is applied thereto whilst the magnetic field is maintained at least until the polymers reach their gel point to produce sufficient cross-linking density to maintain the particles in the vertically aligned condition.

3    A method according to claim 1 or 2, in which the magnetic field and the radiant energy are applied to different portions of the binder system on the substrate sequentially.

4    A method according to claim 1 or 2, in which the magnetic field and the radiant energy are applied to all the binder system on the substrate simultaneously.

5    A method according to claim 1 or 2, in which the magnetic field is applied simultaneously to all the magnetic particles and the

8

radiant energy is applied to different portions of the binder system on the substrate sequentially.

6    A method according to any preceding claim, in which the radiant energy is supplied by an electron beam.

7    A method according to any of claims 1 to 5, in which the radiant energy is supplied by infrared radiation.

8    A method according to any of claims 1 to 5, in which the radiant energy is supplied by ultraviolet radiation.

FIG. 1

UNCURED BINDER

GELLED BINDER

FIG. 2